# FASCICULE DE BREVET EUROPEEN

(11) **EP 0 436 436 B1**
(45) Date de publication et mention de la délivrance du brevet: **17.08.1994**
(21) Numéro de dépôt: 90403764.5
(22) Date de dépôt: 26.12.1990
(51) Int. Cl.: H01G 9/00

(54) **Electrodes massives en carbone poreux activé, leur procédé de fabrication et leur utilisation dans un condensateur à double couche électrique**
Massive Elektroden aus aktiviertem porösem Kohlenstoff, Verfahren zu ihrer Herstellung und ihre Verwendung in einem elektrischen Doppelschichtkondensator
Activated porous carbon massive electrodes, process of making them, and use thereof in an electrical double layer capacitor

(30) Priorité: 27.12.1989 FR 8917239
(43) Date de publication de la demande: 10.07.1991
(73) Titulaire: CENTRE NATIONAL D'ETUDES SPATIALES, F-75039 Paris Cedex 01 (FR)
(72) Inventeur: Metrot, André, F-51500 Rilly La Montagne (FR); Willmann, Patrick, F-31450 Montgiscard (FR)
(74) Mandataire: Dubois-Chabert, Guy

(56) Documents cités:
- EP-A- 0 176 692
- FR-A- 2 228 031
- US-A- 3 652 902
- US-A- 4 691 266
- NEW MATERIAL AND NEW PROCESSES, vol. 3, 1985, pages 352-356; A. YOSHIDA et al.: "An electric double layer capacitor with activated carbon fibers electrodes"
- PATENT ABSTRACTS OF JAPAN, vol. 13, no. 413 (E-820), 12 septembre 1989; & JP-A-01 152 715

## Description

La présente invention a pour objet des électrodes en carbone poreux activé destinées à être utilisées par couple ou en empilements multiples dans des condensateurs à double couche électrique et à électrolyte.

En particulier, les électrodes de l'invention sont destinées à être utilisées dans des batteries de condensateurs connectés en série, capables de restituer une quantitée élevée d'énergie électrique pendant un temps court. Ces condensateurs sont utilisés plus spécialement comme pile rechargeable pour l'alimentation électrique d'appareils électroniques, de jouets, de montres et comme alimentation de secours des circuits électroniques complexes, lors d'une coupure de courant sur le réseau.

Les condensateurs à double couche électrique fonctionnent sur le principe de l'adsorption à la surface d'une électrode conductrice chargée d'une couche d'ions de charge opposée provenant de l'électrolyte. Cette double couche électrique est aussi appelée couche double d'Helmholtz. Les condensateurs à double couche électrique se caractérisent par une très forte capacité massique ou volumique (typiquement de 6 farads/g) et une tension de charge limitée à 3 volts en fonctionnement.

De par leurs caractéristiques, ces condensateurs se situent à mi-chemin entre les condensateurs électrolytiques classiques de quelques micro- ou millifarads, utilisés comme composant dans les circuits électroniques et les accumulateurs. Ils se différencient des accumulateurs par leur niveau d'énergie électrique stockable et par leur tension directement liée à leur état de charge et par leur régime de charge/décharge très rapide. En outre, le nombre de cycles de charge/décharge de ces condensateurs est beaucoup plus important que celui des accumulateurs du fait qu'aucune réaction chimique n'est mise en jeu dans les conditions normales d'utilisation.

Ces condensateurs à double couche électrique sont actuellement destinés au stockage d'énergie principalement dans des alimentations de secours de faible puissance dans des dispositifs électroniques complexes (conservation mémoire), car ils présentent de très bonnes performances électriques associées à une très grande fiabilité et une durée de vie élevée ainsi qu'un coût modéré.

Malheureusement, de nombreuses applications actuellement réservées soit aux accumulateurs électrochimiques capables de fournir de fortes puissances électriques pendant des périodes prolongées, tels que les batteries de voiture, soit aux condensateurs performants tels que les condensateurs au tantale leur restent fermées en raison, d'une part d'une énergie massique utile trop inférieure à celle des accumulateurs électrochimiques et, d'autre part, d'une résistance interne supérieure à celle des condensateurs classiques.

Les condensateurs à double couche électrique sont constitués de deux électrodes de grande surface spécifique disposées de part et d'autre d'un séparateur isolant électrique, le tout étant imbibé d'un électrolyte conducteur.

A l'heure actuelle, les condensateurs commercialisés utilisent principalement une solution aqueuse d'acide sulfurique comme électrolyte, mais de nombreux travaux ont mis en évidence les avantages procurés par des électrolytes organiques.

Leurs électrodes se présentent soit sous forme d'un lit de poudre ou de grains de carbone activé ou de métal, soit sous forme de tissu ou de feutre constitué de fibres de carbone entrelacées. En particulier dans le document New Materials and New Processes, vol. 3, 1985, p. 352-356, A YOSHITA and al. "An Electric double layer capacitor with activated carbon fiber electrodes", il est décrit un condensateur à double couche électrique dans lequel les électrodes sont constituées de fibres de carbone tissées recouvertes sur l'une des faces d'une couche d'aluminium.

Ces différentes formes d'électrode, de par leur constitution, présentent toutes des résistances électriques élevées, responsables de la résistance interne élevée des condensateurs à double couche électrique les utilisant et donc de leur domaine d'application limité.

Il est par ailleurs connu par le document EP-A-176 692 de réaliser des électrodes en carbone massif poreux activé recouvert d'une couche de contact électrique en cuivre. Ces électrodes sont imprégnées d'un électrolyte à base d'acide sulfurique.

Ces électrodes ont l'inconvénient d'être limitées à de faibles épaisseurs, de l'ordre du millimètre. De ce fait, pour réaliser des condensateurs de capacité élevée, il faut soit des électrodes de grandes surfaces géométriques, soit des associations de nombreux éléments de condensateur, en série et/ou en parallèle, conduisant à des montages complexes et donc à des performances inférieures à celles escomptées en terme d'énergies volumique et massique du fait de la nécessité de connexions entre les éléments de condensateurs, d'isolation électriques à assurer entre chaque élément de condensateur et de séparateurs dans chaque élément de condensateur pour assurer une réserve d'électrolyte.

De plus, la réalisation d'électrodes de grande surface géométrique et/ou l'association d'un grand nombre d'éléments de condensateur limitent considérablement l'utilisation de ces électrodes et des condensateurs les contenant. En particulier, ces condensateurs sont difficilement adaptables aux normes internationales existantes en matière d'accumulateurs et piles.

L'invention a justement pour objet de nouvelles électrodes en carbone activé présentant des résistances électriques notablement plus faibles que celles des électrodes connues, utilisables dans des condensateurs à double couche électrique et permettant d'améliorer les performances électriques de ces derniers. Elle permet en particulier la réalisation de condensateurs de capacité élevée et de tout format et notamment compatibles avec les normes internationales.

De façon plus précise, l'invention a pour objet des électrodes pourvues chacune d'une première et d'une seconde faces opposées, caractérisées en ce qu'elles sont constituées de carbone massif poreux activé et sont recouvertes sur leur première face d'une couche mince continue, conductrice de l'électricité et en ce que la seconde face est pourvue de trous non débouchants.

Le mot "massif" signifie que l'électrode est continue et homogène et n'est pas constituée de grains ou fibres disposés les uns à côté des autres. Cette continuité de la matière permet de diminuer la résistance électrique des électrodes notamment par disparition des résistances électriques intergranulaires ou interfibres par rapport aux électrodes connues.

Les électrodes de l'invention peuvent avoir des dimensions et des formes très variées, leur autorisant une grande souplesse d'emploi, à condition que leur surface spécifique reste élevée, supérieure à 500 m²/g, en vue de leur utilisation dans des condensateurs à double couche électrique; plus la surface spécifique des électrodes est élevée, plus la puissance énergétique stockée est importante. Dans le cas d'électrodes cylindriques, il est souhaitable que D/E soit aussi grand que possible et de préférence supérieur à 5, avec D représentant le diamètre des électrodes et E représentant leur épaisseur. En particulier, les électrodes ont une épaisseur supérieure à 2 mm.

L'utilisation de carbone poreux permet par exemple de leur conférer une surface spécifique de l'ordre de 1000 m²/g et une porosité d'environ 70%, ce qui, lors de leur utilisation dans un condensateur à électrolyte, permet d'assurer une bonne répartition de l'électrolyte et donc une aire de double couche très étendue.

La présence de trous débouchants pratiqués dans la seconde face de chaque électrode qui est en contact avec l'électrolyte permet d'améliorer encore l'accès de l'éléctrolyte dans toutes les porosités du carbone d'où une meilleure répartition des lignes de courants. Il s'ensuit donc de meilleures performances électriques du condensateur, telles qu'une aptitude aux régimes élevés de décharge, à surfaces d'électrodes comparables.

De ce fait, les électrodes peuvent avoir des formes variées permettant de réaliser aisément des condensateurs de capacités élevées requérant des volumes d'électrodes importants.

Les électrodes de l'invention étant destinées à équiper un condensateur à double couche électrique, L'invention concerne aussi un tel condensateur.

Selon une caractéristique principale, ce condensateur comprend une enveloppe étanche renfermant au moinns un élément unitaire colportant deux électrodes imprégnées d'un électrolyte, pourvues chacune d'une première et d'une seconde faces, opposées, les secondes faces de ces électrodes étant disposées en regard et pourvues de trous non débouchants, un séparateur poreux isolant électrique, intercalé entre les secondes faces des électrodes et au contact de celles-ci, les électrodes étant constituées de carbone massif poreux activé et recouvertes sur leur première face d'une couche mince continue conductrice de l'électricité en contact avec les moyens d'amenée de courant aux électrodes.

Les couches minces conductrices des électrodes peuvent être constituées de carbone vitreux ou d'un métal inerte chimiquement vis-à-vis de l'électrolyte, dans les conditions normales d'utilisation.

Selon l'invention, les couches conductrices équipant les deux électrodes d'un même élément unitaire peuvent être identiques ou différentes. En particulier, le métal utilisé peut dépendre de la polarité appliquée.

Comme métal chimiquement inerte utilisable dans l'invention quelle que soit la polarité des électrodes, on peut citer le platine, le titane et l'or. De préférence, les couches minces des deux électrodes d'un même élément unitaire sont réalisées en or.

Ces couches minces conductrices permettent de réaliser un excellent collecteur de courant ayant une résistance de contact minimum avec le carbone poreux. En outre, elles assurent l'étanchéité vis-à-vis de l'électrolyte, ce qui est spécialement intéressant dans le cas d'un condensateur comportant plusieurs éléments unitaires reliés électriquement en série. Dans ce cas, la liaison électrique est assurée par la mise en contact direct des couches minces conductrices des éléments unitaires successifs.

Avec des électrodes à trous non débouchants, d'épaisseur élevée (plusieurs millimètres de haut) et une association en série des éléments de condensateur, il est possible de moduler la tension de charge selon l'application envisagée. Cette association présente une grande flexibilité.

L'invention a encore pour objet un procédé de fabrication d'une électrode telle que décrite précédemment.

Ce procédé consiste à :
(a) mélanger de la poudre de charbon, des goudrons et éventuellement un additif acide liquide pour former une pâte homogène,
(b) former une ébauche de l'électrode par compression de la pâte dans un moule de forme correspondante à celle de l'électrode à fabriquer, ladite ébauche comportant des trous non débouchants dans l'une de ses faces destinée à constituer la seconde face de l'électrode opposée à la première,
(c) transformer à chaud la pâte comprimée en coke,
(d) activer le coke par combustion ménagée jusqu'à obtention de carbone poreux,
(e) dégazer le carbone poreux, et
(f) déposer la couche mince continue sur la première face.

Les trous de l'ébauche peuvent être obtenus, soit directement lors du moulage, soit après celui-ci par perçage mécanique de l'ébauche obtenue après compression.

Ces trous non débouchants permettent, lors de la fabrication des électrodes, une activation en profondeur du carbone en assurant l'accès de l'atmosphère d'activation dans le carbone, et ce quelle que soit l'épaisseur de l'électrode. Généralement, l'activation homogène d'une pièce en carbone sur toute son épaisseur n'est possible que si aucune zone de cette pièce ne se trouve à plus de 2 mm de la surface en contact avec l'atmosphère d'activation. Grâce aux trous pratiqués dans l'ébauche de l'électrode, l'activation du carbone peut avoir lieu pour des électrodes de plusieurs millimètres, voire plusieurs centimètres d'épaisseur.

De façon à assurer une tenue mécanique suffisante des électrodes, avec une capacité massique la plus élevée possible, les inventeurs ont trouvé qu'une activation homogène conduisant à une masse finale égale à environ 35% en poids de l'ébauche formée au cours du moulage était tout à fait satisfaisante. L'activation peut avoir lieu avec du CO₂ ou de la vapeur d'eau diluée selon 1 à 60% en volume dans un gaz vecteur, inerte chimiquement.

Les couches conductrices en métal peuvent être déposées par différentes méthodes et en particulier par électrolyse ou par dépôt sous vide. De préférence, ces couches métalliques sont déposées par évaporation sous vide pour des raisons de facilité de fabrication et de propreté.

Les électrodes de l'invention peuvent être utilisées aussi bien avec un électrolyte aqueux constitué en particulier d'une solution d'acide sulfurique ou d'acide phosphorique ou bien d'un solvant organique aprotique anhydre renfermant un sel. Comme solvant organique aprotique on peut citer le carbonate de propylène, l'acétonitrile, le diméthylsulfoxyde (DMSO), le tétrahydrofuranne (THF), le diméthylformamide (DMF), le sulfate de diméthyle, le dioxolane et leurs mélanges. Comme sel dissous dans le solvant organique, on peut citer LiClO₄, LiBF₄, KPF₆, NaPF₆, LiAsF₆.

Les électrolytes organiques sont beaucoup plus visqueux que les électrolytes aqueux. Aussi, du fait des trous non débouchants des électrodes de l'invention, l'électrolyte diffuse beaucoup plus facilement que dans une électrode pleine. Ainsi, les électrodes de l'invention sont parfaitement bien adaptées à leur utilisation dans un condensateur à électrolyte organique.

Les électrolytes organiques permettent, par rapport à des électrolytes aqueux, d'augmenter la tension appliquée aux bornes du condensateur et donc la quantité d'énergie stockée.

De façon connue, un séparateur poreux en matériau isolant électrique est inséré entre les secondes faces des électrodes du condensateur. Ce séparateur est constitué d'une membrane ou feutre ou tissu ou encore grille totalement perméable à l'électrolyte et est réalisé dans un matériau chimiquement inerte tel que le polypropylène ou le téflon.

D'autres caractéristiques et avantages de l'invention ressortiront mieux de la description qui va suivre, donnée à titre illustratif et non limitatif, en référence aux figures annexées, dans lesquelles:
- la figure 1 représente schématiquement un condensateur utilisant des électrodes conformes à l'invention, et
- la figure 2 représente schématiquement un cycle de charge/décharge du condensateur de la figure 1.

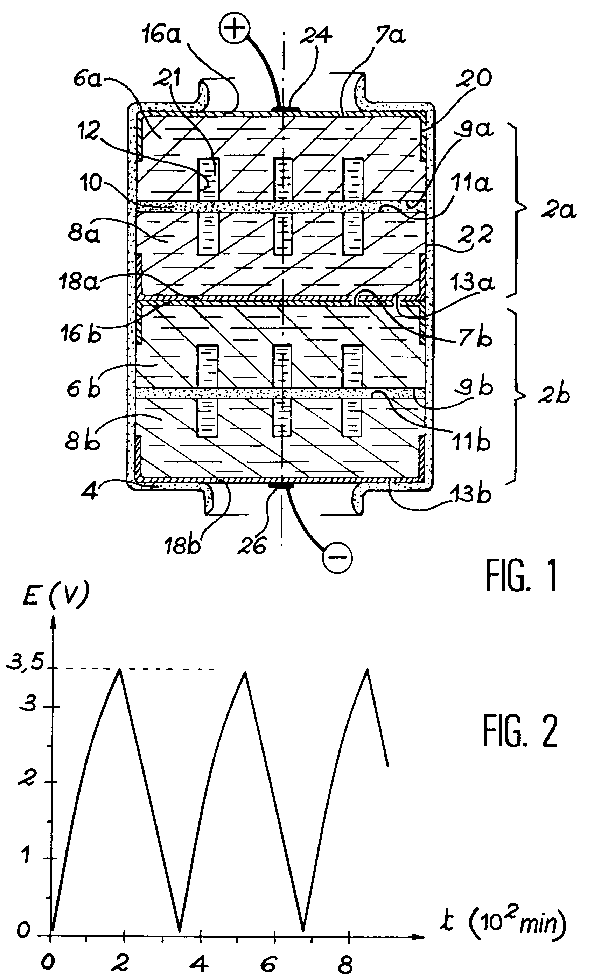

Le condensateur à double couche électrique représenté sur la figure 1 comporte deux éléments unitaires 2a et 2b identiques, logés dans une enveloppe externe 4 étanche en téflon thermorétractable. Chaque élément unitaire 2a, 2b comporte deux électrodes respectivement 6a, 8a et 6b, 8b en carbone massif poreux activé, de 1 à 10 mm d'épaisseur et de surface spécifique de l'ordre de 1000 m²/g. Ces électrodes ont une forme cylindrique ; leur diamètre est fonction de l'utilisation envisagée.

Les électrodes de chaque élément 6a, 8a et 6b, 8b sont séparées par un séparateur isolant électrique 10 d'au moins 0,1 mm d'épaisseur; ce séparateur 10 est poreux et réalisé en un tissu de téflon ou de polypropylène.

Les faces 9a, 9b, 11a, 11b respectivement des électrodes 6a, 6b et 8a, 8b, disposées au contact du séparateur 10, comportent des trous 12 non débouchants, répartis de façon homogène sur la surface des électrodes. Ces trous ont un diamètre de 1 à 4 mm et une profondeur qui croît avec l'épaisseur de l'électrode correspondante. En particulier, l'épaisseur de carbone poreux compris entre le fond des trous et la face 9a, 9b, 11a ou 11b correspondante est inférieure à 4 mm et par exemple égale à 3 mm.

Ces trous permettent d'une part de réaliser une activation homogène du carbone dans toute la masse de l'électrode et, d'autre part, de faciliter l'accès de l'électrolyte.

Les faces 7a, 7b, 13a, 13b des électrodes 6a, 6b, 8a et 8b opposées respectivement aux faces 9a, 9b, 11a, 11b sont pourvues respectivement d'une couche métallique continue conductrice 16a, 16b, 18a, 18b de 1 à 50 microns d'épaisseur. Ces couches métalliques recouvrent en outre une partie des faces latérales 20 et 22 respectivement des électrodes 6a, 6b et 8a, 8b ; ces débordements sur les faces latérales peuvent se prolonger jusqu'au séparateur 10 sans toutefois être au contact de celui-ci, afin d'éviter tout court-circuit.

Les couches métalliques 18a et 16b respectivement des deux éléments unitaires 2a et 2b sont au contact l'une de l'autre et assurant ainsi le contact électrique entre les deux éléments 2a et 2b. Parallèlement, les couches minces 16a et 18b respectivement des éléments unitaires 2a et 2b sont équipées d'un plot électrique 24 et 26 constituant respectivement les pôles + et - du condensateur.

Les différents constituants de condensateur sont agencés de façon à former un ensemble compact et homogène, à symétrie de révolution.

Les électrodes 6a, 6b et 8a, 8b de chaque élément unitaire sont imprégnées d'un électrolyte liquide 21, constitué par exemple d'une solution molaire de LiClO₄ dans l'acétonitrile. Les trous 12 servent non seulement à améliorer l'accès de l'électrolyte dans les pores du carbone constituant les électrodes, mais aussi à augmenter la surface des électrodes.

L'étanchéité du condensateur est assurée grâce à l'enveloppe thermorétractable 14, mais aussi grâce aux couches métalliques 16a, 16b, 18a, 18b ; en particulier, l'étanchéité entre les éléments 2a et 2b est assurée par les couches métalliques 18a et 16b.

Les couches métalliques 16a, 16b, 18a, 18b sont réalisées par un dépôt sous vide d'or. Elles assurent, en plus de l'étanchéité, un bon contact ohmique entre les différents éléments 2a et 2b associés et les différentes arrivées de courant 24 et 26.

Le condensateur de l'invention peut être réalisé selon le format R 14 qui est un format normalisé selon les normes I.E.C. (International Electrotechnical Commission). Selon cette norme, le diamètre du condensateur est égal à son épaisseur et vaut environ 26 mm.

Dans ces conditions, il est possible d'utiliser deux éléments unitaires comportant des couches d'or de 10 micromètres d'épaisseur, des séparateurs de 2 mm d'épaisseur et des électrodes de carbone poreux de 12 mm d'épaisseur, pourvues chacune de 7 trous de 9 mm de profondeur et de 4 mm de diamètre.

Chaque élément unitaire tel que décrit précédemment comporte une tension maximum en charge de 3 volts, une capacité massique de 10 farads/g, une capacité volumique de 10,5 farads/cm³ et une énergie massique de 44 J/g (soit 12 Wh/kg) pour une décharge totale.

Sur la figure 1, on n'a représenté que deux éléments unitaires de façon à simplifier la description. Toutefois, il est possible d'associer un grand nombre de ces éléments (jusqu'à 10 par exemple) selon la tension maximale que l'on souhaite obtenir.

Pour obtenir avec les électrodes décrites dans le document EP-A-176 692 un condensateur de capacité comparable à celui d'un élément de condensateur de la figure 1, à tension de charge et électrolyte identiques, il y aurait lieu d'associer en parallèle 12 éléments unitaires équipés de deux électrodes de 1 mm d'épaisseur chacune ; ceci complique notablement la fabrication du condensateur final et augmente de façon élevée son temps et son coût de fabrication par rapport à l'invention.

Sur la figure 2, on a représenté une courbe de charge/décharge d'un élément unitaire, tel que décrit précédemment, renfermant comme électrolyte du LiCLO₄ molaire dans l'acétonitrile. Cette courbe donne les variations de la tension E, exprimée en volts, en fonction du temps t, exprimé en minute, pour une intensité de courant constante de 50 milliampères.

Cette courbe illustre en particulier le bon fonctionnement d'un condensateur selon l'invention entre 0 et 3 volts. Au-dessus de 3,5 volts, des réactions chimiques se produisent entraînant une dégradation du condensateur.

Pour fabriquer les électrodes de l'invention, on utilise tout d'abord une pâte obtenue par malaxage d'un mélange constitué de 89,5% en poids de poudre de charbon de bois, 10% en poids de goudrons de houille et/ou de bois et 0,5% en poids d'acide phosphorique comme additif. Bien entendu, ces proportions peuvent être modifiées de ± 5% en poids.

Cette pâte est alors introduite dans un moule de forme correspondant à celle de l'électrode à fabriquer puis soumise à une pression à froid de 2 à 10 × 10⁷ Pa (typiquement 7 × 10⁷ Pa) pendant une période de 30 secondes à 10 minutes. On obtient ainsi une ébauche d'électrode comportant des trous non débouchants dans l'une de ses faces qui constitueront ultérieurement les trous 12 de l'électrode.

L'ébauche d'électrode est ensuite placée dans un four sous un courant d'azote de façon à transformer la pâte comprimée en coke. Cette cokéfaction est assurée en élevant progressivement et continûment la température jusqu'à 650°C environ. L'élévation de la température est de 300°C par heure environ.

On effectue ensuite l'activation de l'ébauche cokéfiée par une combustion ménagée du coke jusqu'à obtention d'un carbone poreux de porosité et de tenue mécanique voulues. Cette activation est effectuée à 950°C sous un courant gazeux contenant de l'azote et de la vapeur d'eau en quantité volumique égale pendant quelques heures (typiquement 4 heures).

Les travaux des inventeurs ont montré que l'électrode finale présentait des performances optimales de capacité et de tenue mécanique lorsque l'activation homogène conduisait à une masse finale égale à 35% de celle de l'ébauche initiale obtenue après la compression à froid.

On effectue ensuite un chauffage à une température d'au moins 1200°C et par exemple égale à 1200°C sous un vide dynamique à une pression au plus égale à 1 Pa pendant quelques heures (typiquement 4 heures). Ce chauffage permet un dégazage de l'électrode obtenue.

Sur la face de l'électrode obtenue, opposée à celle comportant les trous non débouchants, on dépose alors sous vide (en particulier par évaporation) une couche de 10 micromètres d'or après avoir effectué un polissage préalable de cette face en vue d'améliorer la qualité du dépôt métallique.

Les électrodes ainsi formées peuvent alors être associées comme représenté sur la figure 1 pour former un condensateur à double couche électrique.

## Revendications

1. Electrodes (6a, 8a, 6b, 8b) pourvues chacune d'une première (7a, 13a, 7b, 13b) et d'une seconde (9a, 11a, 9b, 11b) faces opposées, caractérisées en ce qu'elles sont constituées de carbone massif poreux activé et sont recouvertes sur leur première face d'une couche mince continue (16a, 18a, 16b, 18b), conductrice de l'électricité, et en ce que la seconde face (9a, 11a, 9b, 11b) est pourvue de trous (12) non débouchants.

2. Electrodes selon la revendication 1, destinées à être imprégnées d'un électrolyte (21), caractérisées en ce que la couche mince (16a, 18a, 16b, 18b) est réalisée en carbone vitreux ou en un métal inerte chimiquement vis-à-vis de l'électrolyte, dans les conditions normales d'utilisation.

3. Electrodes selon la revendication 1 ou 2, caractérisées en ce que la couche mince est en or.

4. Electrodes selon l'une quelconque des revendications 1 à 3, caractérisées en ce qu'elles présentent une épaisseur supérieure à 2 mm.

5. Condensateur à double couche électrique comprenant une enveloppe étanche (4) renfermant au moins un élément unitaire (2a, 2b) comportant deux électrodes (6a, 8a, 6b, 8b) imprégnées d'un électrolyte, pourvues chacune d'une première (7a, 13a, 7b, 13b) et d'une seconde (9a, 11a, 9b, 11b) faces opposées, les secondes faces étant disposées en regard et pourvues de trous (12) non débouchants, un séparateur poreux (10) isolant électrique intercalé entre les secondes faces des électrodes et au contact de celles-ci, les électrodes étant constituées de carbone massif poreux activé et recouvertes sur leur première face d'une couche mince continue (16a, 18a, 16b, 18b), conductrice de l'électricité en contact avec les moyens d'amenée (24, 26) de courant aux électrodes.

6. Condensateur selon la revendication 5, caractérisé en ce que l'électrolyte (21) est constituée d'un solvant organique aprotique renfermant un sel.

7. Condensateur selon la revendication 5 ou 6, caractérisé en ce qu'il comprend plusieurs éléments unitaires (2a, 2b) reliés électriquement entre eux via les couches minces conductrices (18a, 16b).

8. Condensateur selon l'une quelconque des revendications 5 à 7, caractérisé en ce qu'il comprend plusieurs éléments unitaires (2a, 2b) empilés, la couche mince (18a) d'une électrode (8a) d'un élément (2a) étant au contact direct de la couche mince (16b) d'une électrode (6b) d'un autre élément (2b), les électrodes en contact étant de polarités différentes.

9. Condensateur selon l'une quelconque des revendications 5 à 8, caractérisé en ce que l'enveloppe étanche est constituée d'un isolant électrique thermorétractable.

10. Procédé de fabrication d'une électrode en carbone poreux massif activé, recouverte sur une première face d'une couche mince continue conductrice de l'électricité, consistant à :
(a) mélanger de la poudre de charbon, des goudrons et éventuellement un additif acide liquide pour former une pâte homogène,
(b) former une ébauche de l'électrode par compression de la pâte dans un moule de forme correspondante à celle de l'électrode à fabriquer, ladite ébauche comportant des trous non débouchants (12) dans l'une de ses faces destinée à constituer la seconde face (9a, 11a, 9b, 11b) de l'électrode (6a, 8a, 6b, 8b) opposée à la première,
(c) transformer à chaud la pâte comprimée en coke,
(d) activer le coke par combustion ménagée jusqu'à obtention de carbone poreux,
(e) dégazer le carbone poreux, et
(f) déposer la couche mince continue (16a, 18a, 16b, 18b) sur la première face (7a, 13a, 7b, 13b).

11. Procédé selon la revendication 10, caractérisé en ce que l'étape (d) est effectuée jusqu'à ce que le carbone poreux constituant l'électrode représente 35% environ en poids de l'ébauche formée à l'étape (b).

12. Procédé selon la revendication 10 ou 11, caractérisé en ce que l'étape (c) est effectuée par élévation progressive de la température.

## Patentansprüche

1. Elektroden (6a, 8a, 6b, 8b), die jeweils mit einer ersten (7a, 13a, 7b, 13b) und einer zweiten (9a, 11a, 9b, 11b) gegenüberliegenden Fläche versehen sind, dadurch gekennzeichnet, daß sie aus massivem porösen aktivierten Kohlenstoff bestehen und auf ihrer ersten Fläche mit einer dünnen kontinuierlichen (16a, 18a, 16b, 18b) stromleitenden Schicht überzogen sind, und daß die zweite Fläche (9a, 11a, 9b, 11b) mit nicht durchführenden Öffnungen (12) versehen ist.

2. Elektroden nach Anspruch 1 zur Imprägnierung mit einem Elektrolyten (21), dadurch gekennzeichnet, daß die dünne Schicht (16a, 18a, 16b, 18b) aus glasartigem Kohlenstoff oder aus einem unter den normalen Anwendungsbedingungen gegenüber dem Elektrolyten chemisch reaktionslosen Metall ausgeführt ist.

3. Elektroden nach Anspruch 1 oder 2, dadurch gekennzeichnet, daß die dünne Schicht aus Gold besteht.

4. Elektroden nach einem der Ansprüche 1 bis 3, dadurch gekennzeichnet, daß sie eine Dicke über 2mm aufweisen.

5. Kondensator mit doppelter elektrischer Schicht, die eine undurchlässige Umhüllung (4) aufweist, die mindestens ein unitäres Element (2a, 2b) einschließt, das zwei Elektroden (6a, 8a, 6b, 8b) umfaßt, die mit einem Elektrolyten imprägniert sind und jeweils mit einer ersten (7a, 13a, 7b, 13b) und einer zweiten (9a, 11a, 9b, 11b) gegenüberliegenden Fläche versehen sind, wobei die zweiten Flächen gegenüberliegend angeordnet sind und mit nicht durchführenden Öffnungen (12) versehen sind, wobei ein poröser, elektrisch isolierender Separator (10) zwischen den zweiten Flächen der Elektroden zwischengeschaltet ist und mit ihnen in Kontakt steht, wobei die Elektroden aus massivem porösen aktivierten Kohlenstoff bestehen und auf ihrer ersten Fläche mit einer dünnen kontinuierlichen Schicht (16a, 18b, 16b, 18b) überzogen sind, die in Kontakt mit den Stromzuleitungsmitteln (24, 26) an die Elektroden stromleitend ist.

6. Kondensator nach Anpruch 5, dadurch gekennzeichnet, daß der Elektrolyt (21) aus einem organischen aprotischen, ein Salz einschließenden Lösungsmittel besteht.

7. Kondensator nach Anspruch 5 oder 6, dadurch gekennzeichnet, daß er mehrere unitäre Elemente (2a, 2b) aufweist, die über die dünnen leitenden Schichten (18a, 16b) untereinander elektrisch verbunden sind.

8. Kondensator nach einem der Anprüche 5 bis 7, dadurch gekennzeichnet, daß er mehrere aufeinander gestapelte unitäre Elemente (2a, 2b) umfaßt, wobei die dünne Schicht (18a) einer Elektrode (8a) eines Elements (2a) in direktem Kontakt steht mit der dünnen Schicht (16b) einer Elektrode (6b) eines anderen Elements (2b), wobei die in Kontakt befindlichen Elektroden verschiedene Polaritäten haben.

9. Kondensator nach einem der Ansprüche 5 bis 8, dadurch gekennzeichnet, daß die undurchlässige Umhüllung aus einem thermoretraktablen elektrischen Isolationsmaterial besteht.

10. Herstellungsverfahren einer Elektrode aus massivem aktivierten Kohlenstoff, die auf einer ersten Fläche mit einer dünnen kontinuierlichen stromleitenden Schicht überzogen ist, welches darin besteht:
(a) Holzkohlenpulver, Teer und eventuell einen flüssigen Säurezusatz zu mischen, um eine homogene Masse zu bilden,
(b) einen Elektrodenrohling zu bilden durch Kompression der Masse in einer Form, deren Formgebung der der herzustellenden Elektrode entspricht, wobei der Rohling nicht durchführende Öffnungen (12) auf einer seiner Flächen aufweist, die zum Bilden der zweiten Fläche (9a, 11a, 9b, 11b) der Elektrode (6a, 8a, 6b, 8b) gegenüberliegend der Ersten bestimmt ist,
(c) die komprimierte Masse unter Hitze zu Koks umzuwandeln,
(d) das Koks durch einen kontrollierten Verbrennungsvorgang bis zum Erhalt von porösem Kohlenstoff zu aktivieren,
(e) den porösen Kohlenstoff zu entgasen, und
(f) die dünne kontinuierliche Schicht (16a, 18a, 16b, 18b) auf die erste Fläche (7a, 13a, 7b, 13b) abzulagern.

11. Verfahren nach Anpruch 10, dadurch gekennzeichnet, daß der Schritt (d) ausgeführt wird, bis der die Elektrode bildende poröse Kohlenstoff etwa 35 Gewichtsprozent des im Schritt (b) gebildeten Rohlings darstellt.

12. Verfahren nach Anspruch 10 oder 11, dadurch gekennzeichnet, daß der Schritt (c) durch schrittweise Temperaturerhöhung ausgeführt wird.

## Claims

1. Electrodes (6a, 8a, 6b, 8b) each provided with a first face (7a, 13a, 7b, 13b) and a second face (9a, 11a, 9b, 11b) opposite each other, characterised in that they are comprised of solid porous activated carbon and are covered on their first face with a thin continuous layer (16a, 18a, 16b, 18b) which conducts electricity, and in that the second face (9a, 11a, 9b, 11b) is provided with blind holes (12).

2. Electrodes according to claim 1, intended to be impregnated with an electrolyte (21), characterised in that the thin layer (16a, 18a, 16b, 18b) is produced of vitreous carbon or a metal chemically inert with regard to the electrolyte in normal conditions of usage.

3. Electrodes according to claim 1 or 2, characterised in that the thin layer is of gold.

4. Electrodes according to any one of claims 1 to 3, characterised in that they have a thickness of greater than 2 mm.

5. A capacitor having a double electric layer comprising an impervious cover (4) covering at least one unit element (2a, 2b) comprising two electrodes (6a, 8a, 6b, 8b) impregnated with an electrolyte, each provided with a first face (7a, 13a, 7b, 13b) and a second face (9a, 11a, 9b, 11b) opposite to each other, the second faces being disposed facing and provided with blind holes (12), a porous electrical insulating separator (10) interposed between the second faces of the electrodes and in contact therewith, the electrodes being comprised of solid porous activated carbon and covered on their front face by a thin continuous layer (16a, 18a, 16b, 18b) which conducts electricity in contact with the means (24, 26) for carrying the current to the electrodes.

6. A capacitor according to claim 5, characterised in that the electrolyte (21) is comprised on an organic aprotic solvent containing a salt.

7. A capacitor according to claim 5 or claim 6, characterised in that it comprises several unit elements (2a, 2b) electrically interlinked by way of the thin conductive layers (18a, 16b).

8. A capacitor according to any one of the claims 5 to 7, characterised in that it comprises several stacked unit elements (2a, 2b), the thin layer (18a) of an electrode (8a) of an element (2a) being in direct contact with the thin layer (16b) of an electrode (6b) of another element (2b), the contacting electrodes being of different polarities.

9. A capacitor according to any one of the claims 5 to 8, characterised in that the impervious cover is comprised of an electrical thermo-retractable insulator.

10. A manufacturing process for an electrode in solid porous activated carbon, covered on a first face with a thin continuous layer which conducts electricity, comprising:
(a) mixing carbon powder, tars and possibly a liquid acid additive to form a homogeneous paste,
(b) forming a blank of the electrode by compressing the paste in a mould of a shape corresponding to that of the electrode to be manufactured, the said blank comprising blind holes (12) in one of the faces which is intended to comprise the second face (9a, 11a, 9b, 11b) of the electrode (6a, 8a, 6b, 8b) opposite the first,
(c) under heating changing the compressed paste into coke,
(d) activating the coke by gradual combustion until porous carbon is obtained,
(e) degassing the porous carbon, and
(f) depositing the thin continuous layer (16a, 18a, 16b, 18b) on the first face (7a, 13a, 8b, 13b).

11. A process according to claim 10, characterised in that stage (d) is carried out to the point where the porous carbon comprising the electrode represents approximately 35 % in weight of the blank formed in stage (b).

12. A process according to claim 10 or 11, characterised in that the stage (c) is carried out by progressively raising the temperature.
